(19) **Europäisches Patentamt**

**European Patent Office**

**Office européen des brevets**

(11) **EP 1 544 268 A1**

(12) **EUROPEAN PATENT APPLICATION**

(43) Date of publication:
22.06.2005 Bulletin 2005/25

(51) Int Cl.7: **C09D 133/14**, C09D 133/02, C09D 175/04

(21) Application number: 04293017.2

(22) Date of filing: **17.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **19.12.2003 JP 2003422849**

(71) Applicant: **Nippon Shokubai Co., Ltd.**
**Osaka-shi, Osaka 541-0043 (JP)**

(72) Inventors:
- **Ogura, Osamu**
  **Suita-shi Osaka 564-0004 (JP)**
- **Miyai, Takashi**
  **Takatsuki-shi Osaka 569-0854 (JP)**
- **Kodama, Naoki**
  **Mino-shi Osaka 562-0022 (JP)**

(74) Representative: **Hart Davis, Jason et al**
**Cabinet Beau de Loménie,**
**158, rue de l'Université**
**75340 Paris Cedex 07 (FR)**

(54) **Acrylic resin composition dispersed in water**

(57) The present invention provides an acrylic resin composition dispersed in water giving good appearance, having sufficient dispersion stability, providing coating film physical properties excellent in durability and weather resistance and also capable of properly dealing with the recent environmental issues, and a two-component coating composition set using such an acrylic resin composition dispersed in water. The above-mentioned acrylic resin composition dispersed in water comprises an acrylic resin containing a carboxyl group-containing monomer and a hydroxyl group-containing monomer, a water-dispersible isocyanate compound, and a specific compound as a neutralizing base.

EP 1 544 268 A1

**Description**

FIELD OF THE INVENTION

The present invention relates to an acrylic resin composition dispersed in water and a two-component coating composition set. More particularly, the present invention relates to an acrylic resin composition dispersed in water suitable for a variety of uses such as coating composition for finishing automobiles and refinishing automobiles required to have excellent appearance and excellent coating physical properties, and a two-component coating composition set using such an acrylic resin composition dispersed in water.

BACKGROUND ART

With respect to a resin composition dispersed in water, since the content of an organic solvent can be saved as compared with that of a conventional solvent type resin, such a resin composition dispersed in water has been employed as an environment-friendly resin in a variety of uses such as water-based coating materials (coating compositions) for vehicles, plastic-molded products, domestic electric appliances, steel products, large scale constructions, aircrafts, construction materials, building materials, tiles, and craft products as well as adhesives, resist, printing ink and the like. In a field of automotive coating compositions such as a clear top coating composition for finishing automobiles and refinishing automobiles among such fields, the resin composition dispersed in water is required to give good appearance, sufficiently stable and excellent coating physical properties, and especially high durability and further along with the increased consciousness on environmental issues in recent years, in order to satisfy the requirement of low VOC (volatile organic compounds), a technique of sufficiently decreasing the content of an organic solvent has been desired urgently.

With respect to a conventional resin composition dispersed in water, Japanese Kokai Publication Hei-06-49367 discloses a resin composition dispersed in water obtained by neutralizing a resin mixture containing two type acrylic resins having carboxyl and hydroxyl groups and a water-insoluble compound or a resin having functional group reactive on these groups with a base and dispersing the neutralized mixture in water. Also, Japanese Kokai Publication Hei-11-131017 discloses a water-based coating composition which is a combination of a hydroxyl group-containing polyol and a sealed polyisocyanate crosslinking agent. Also, Japanese Kokai Publication 2004-162030 discloses an aqueous binder dispersion that includes at least one copolymer containing carboxylic acid and/or carboxylate groups wherein some part of the carboxylic acid groups of the copolymer being present in triethanolamine-neutralized form. Further, Japanese Kohyo Publication 2004-527588 (WO02/20638 discloses aqueous 2K PU materials for coating consisting of specially modified vinyl polymer polyol dispersions and polyisocyanates.

However, as those represented by these resin compositions, in the case isocyanate compounds are made to coexist, in general, to neutralize the carboxyl group in the resins, tertiary amine compounds (tertiary amines) such as triethylamine, their salts, sodium hydroxide, and potassium hydroxide are used for preventing the reaction of the neutralizing base and the isocyanate compound, and if they remain in a coating film, there was a room for contrivance to improve the coating film in terms of the durability. Further, to improve the dispersion stability and the like, an emulsifier is practically added and the effect of the emulsifier on the coating film is another issue. Also, there was a room for contrivance to properly deal with the recent environmental issues and at the same time to improve sufficiently the coating film physical properties such as durability.

SUMMARY OF THE PRESENT INVENTION

In view of the above state of the art, it is an object of the present invention to provide an acrylic resin composition dispersed in water giving good appearance, having sufficient dispersion stability, providing coating film physical properties excellent in durability and weather resistance and also capable of properly dealing with the recent environmental issues, and a two-component coating composition set using such an acrylic resin composition dispersed in water.

The present inventors have made various investigations concerning a resin composition dispersed in water and they have found that in the case an acrylic resin composition dispersed in water comprises an acrylic resin containing a carboxyl group-containing monomer and a hydroxyl group-containing monomer, a water-dispersible isocyanate compound, and a specific amine compound as a neutralizing base, the dispersion stability of the acrylic resin in water becomes sufficient by using the specific amine compound and thus the advantageous effects of the present invention can sufficiently be exhibited. Also, the present inventors have found that use of the isocyanate compound previously dispersed in water or diluted with an organic solvent makes it possible to emulsify and stabilize the isocyanate compound in the resin composition and accordingly the reaction of the resin and the neutralizing base is suppressed to improve the storage stability (usable duration) and at the same time, after the coating film formation, reaction of the isocyanate compound with the hydroxyl group in the resin and further with the amine compound used for the neutralization of the carboxyl group is caused to result in prevention of the deterioration of the durability attributed to the neutralizing base and thus excellent appearance and coating film physical properties are provided in the case of using the resin composition dispersed in water. And, they found that the above problems could successfully be solved.

Also, it is generally necessary to lower the molecular weight of the resin composition for providing more excellent appearance, and in this case, the dispersion stability may be insufficient. However, the present inventors have found that further use of a reactive emulsifier as monomer components composing the above-mentioned acrylic resin makes it possible to exhibit sufficient dispersion stability as well as to prevent decrease in durability, even if the molecular weight of the resin composition is lowered. These findings have now led to completion of the present invention.

That is, the present invention is an acrylic resin composition dispersed in water comprising an acrylic resin containing a carboxyl group-containing monomer and a hydroxyl group-containing monomer, a water-dispersible isocyanate compound, and a neutralizing base,

wherein the neutralizing base is an amine reactable with the water-dispersible isocyanate compound, and is a primary amine and/or secondary amine having a boiling point of 280°C or less.

The present invention is also an acrylic resin composition dispersed in water comprising an acrylic resin containing a carboxyl group-containing monomer, a hydroxyl group-containing monomer and a reactive emulsifier, a water-dispersible isocyanate compound, and a neutralizing base,

wherein the neutralizing base is an amine reactable with the water-dispersible isocyanate compound, and is a tertiary amine having a boiling point of 280°C or less.

DETAILED DISCLOSURE OF THE INVENTION

Hereinafter, the present invention will be described in details.

An acrylic resin composition dispersed in water of the present invention comprises an acrylic resin, a water-dispersible isocyanate compound (a water-dispersible isocyanate) , and a neutralizing base (amine compound) , and the resin composition having a content of the organic solvent in the resin composition of 30% by weight (% by mass) or lower is preferable and the resin composition practically containing no organic solvent is more preferable. In such a manner that the content of the organic solvent is remarkably decreased, so that the amount of the resin dissolved in the organic solvent can sufficiently be decreased and accordingly, the viscosity of the resin composition is lowered and that makes it possible to improve the solid matter ratio and suppress the generation of volatile organic compounds (VOC) to sufficiently deal with the recent environmental problems.

As described, the acrylic resin composition dispersed in water of the present invention exhibits the aimed properties and capabilities without adding any organic solvent and based on the uses, for improving the properties and capabilities such as film formability, coating application suitability and the like, an organic solvent in a proper amount based on the necessity may be added additionally.

As the above-mentioned acrylic resin composition dispersed in water, any acrylic resin dispersed in water or a water/organic solvent mixed solvent in the presence of the above-mentioned amine compound and the water-dispersible isocyanate compound may be used without any particular limit. Preferable embodiments are, for example, a resin composition in the state of containing an acrylic resin dispersed in water obtained by dispersing an acrylic resin in water in the presence of the amine compound, and a water-dispersible isocyanate compound; and a resin composition in the state of containing an acrylic resin dispersed in water obtained by dispersing an acrylic resin in a water/ organic solvent mixed solvent in the presence of the amine compound, and a water-dispersible isocyanate compound. Additionally, the resin composition of the present invention may include a compound formed by reacting the acrylic resin and the amine compound.

In addition, an acrylic resin containing a carboxyl group-containing monomer and a hydroxyl group-containing monomer, which comes to be used with the water-dispersible isocyanate compound and the neutralizing base (amine compound) is also one of the present invention. And, an acrylic resin containing a carboxyl group-containing monomer and a hydroxyl group-containing monomer, which comes to be used by dispersing in water or a water/organic solvent mixed solvent in the presence of the amine compound and the water-dispersible isocyanate compound.

In the above-mentioned preferable embodiments, as the acrylic resin composition dispersed in water comprising the acrylic resin in water or a water/organic solvent mixed solvent in the presence of the amine compound, exemplified are those obtained by dispersing an acrylic resin, which is obtained by a solution polymerization in an organic solvent, in water in the presence of the amine compound and then removing the organic solvent; by dispersing an acrylic resin, which is obtained by a solution polymerization in an organic solvent, in a water/organic solvent mixed solvent in the presence of the amine compound; and by dispersing an acrylic resin, which is obtained by a solution polymerization in an organic solvent, in water in the presence of the amine compound, removing the organic solvent, and then further adding an organic solvent. Among them, the composition obtained by dispersing an acrylic resin, which is obtained by a solution polymerization in an organic solvent, in water in the presence of the amine compound and then removing the organic solvent is preferable.

In the above-mentioned water/organic solvent mixed solvent, the weight (mass) ratio of water and the organic solvent is not particularly limited and the water/organic solvent ratio is, for example, preferably (30 to 100)/(0 to 70) and more Preferably (50 to 100)/(0 to 50). Further preferably, as described above, the content of the organic solvent in the acrylic resin composition dispersed in water is set to be 30% by weight or less.

In the above-mentioned acrylic resin composition dispersed in water, the acrylic resin comprises a carboxyl group-containing monomer and a hydroxyl group-containing monomer as essential components. It is more preferable to contain the carboxyl group-containing monomer, the hydroxyl group-containing monomer, and (meth)acrylic acid ester as essential components and based on the necessity, monomer components including other unsaturated monomers. Use of the hydroxyl group-containing monomer is effective to sufficiently improve the crosslinking density and to make the physical properties such as solvent resistance, chemical agent resistance, and coating film hardness excellent in the case the acrylic resin composition dispersed in water of the present invention is used for a hardened coating film or the like.

It is preferable that the above-mentioned acrylic resin further contains a reactive emulsifier as a constituent, and therefore the above-mentioned acrylic resin composition dispersed in water is able to exhibit sufficient dispersion stability as well as to prevent a decrease in durability, even if the molecular weight of the resin is further lowered. In particular, it is suitable that the acrylic resin essentially contains a reactive emulsifier and the like in the case of using a tertiary amine as the neutralizing base.

Additionally, the above-mentioned acrylic resin is obtained by reacting the above-mentioned monomers and the reactive emulsifier used based on the necessity.

The contents of the monomer components composing the acrylic resin are preferable to be properly set in ranges so as to keep the acid value and the hydroxyl value, which will be described later, in preferable ranges.

In the above-mentioned monomer components, as the carboxyl group-containing monomer, one or two or more of the compounds such as (meth) acrylic acid, maleic acid, fumaric acid, crotonic acid, itaconic acid, citraconic acid, maleic anhydride, monomethyl maleate, monobutyl maleate, monomethyl itaconate, and monobutyl itaconate can be used. Among them, (meth) acrylic acid is preferable.

As the hydroxyl group-containing monomer, one or two or more of the following compounds can be used: 2-hydroxyethyl (meth)acrylate, 2-hydroxypropyl (meth)acrylate, 3-hydroxypropyl (meth) acrylate, 2-hydroxybutyl (meth) acrylate, 4-hydroxybutyl acrylate (trade name: "4HBA", manufactured by MITSUBISHI CHEMICAL CORPORATION) , 4-hydroxybutyl methacrylate, $\alpha$-hydroxymethylethyl (meth)acrylate, caprolactone-modified hydroxy (meth)acrylate (trade name: "PLACCEL F series", manufactured by DAICEL CHEMICAL INDUSTRIES, LTD.), 4-methylolcyclohexyl methyl acrylate (trade name: "CHDMMA", manufactured by Nippon Kasei Chemical Co., Ltd.); polyethylene glycol mono (meth) acrylate, polypropylene glycol mono(meth)acrylate, polytetramethylene glycol mono(meth) acrylate, polyethylene glycol polytetramethylene glycol mono(meth)acrylate, and polypropylene glycol polytetramethylene glycol mono (meth) acrylate. Among them, 2-hydroxyethyl (meth)acrylate and 2-hydroxypropyl (meth)acrylate are preferable.

As the above-mentioned (meth)acrylic acid ester, one or two or more of the following alkyl (meth)acrylate esters can be used: methyl (meth)acrylate, ethyl (meth) acrylate, n-butyl (meth)acrylate, isobutyl (meth)acrylate, tert-butyl (meth)acrylate, 2-ethylhexyl (meth)acrylate, cyclohexyl (meth)acrylate, n-octyl (meth)acrylate, isooctyl (meth) acrylate, n-dodecyl (meth)acrylate, benzyl (meth)acrylate, isobornyl (meth)acrylate, 4-methylcyclohexyl (meth)acrylate, tert-butylcyclohexyl (meth)acrylate, cyclooctyl (meth)acrylate, cyclododecyl (meth)acrylate, cyclohexylmethyl (meth)acrylate, dicyclopentanyl (meth)acrylate, and stearyl (meth)acrylate. Among them, in terms of the weather resistance, cycloalkyl (meth) acrylate is preferable, cyclohexyl (meth)acrylate and isobornyl (meth)acrylate are more preferable. In the case cycloalkyl (meth) acrylate is used, it is important that the ratio of the cycloalkyl (meth)acrylate in the above-mentioned monomer components is 5% by weight ormore, preferably 10 to 80% by weight, even further preferably 10 to 70% by weight, in the total of the monomer components. If it is less than 5% by weight, the hardness, luster, thickness retention, and weather resistance of the coating film become insufficient and if it is more than 80% by weight, since the content of the hydroxyl group-containing monomer is lowered, the weather resistance of the coating film becomes insufficient.

Examples of other unsaturated monomers are aromatic unsaturated monomers such as styrene and vinyltoluene; epoxy group-containing unsaturated monomers such as glycidyl (meth)acrylate, $\alpha$-methylglycidyl acrylate, glycidyl allyl ether, oxocyclohexylmethyl (meth)acrylate, 3,4-epoxycyclohexylmethyl acrylate (trade name: "CYCLOMERER A 200", manufactured DAICEL CHEMICAL INDUSTRIES, LTD.), $\alpha$-methylglycidyl methacrylate (trade name: "M-GMA", manufactured DAICEL CHEMICAL INDUSTRIES, LTD.), and 3,4-epoxycyclohexylmethyl methacrylate (trade name: "CYCLOMERER M 100", manufactured DAICEL CHEMICAL INDUSTRIES, LTD.); nitrogen-containing unsaturated monomers such as N,N'-dimethylaminoethyl (meth)acrylate, (meth)acrylamide, N-phenylmaleimide, N-cyclohexylmaleimide, N-vinylpyridine, and N-vinylimidazole; unsaturated cyanides such as (meth) acrylonitrile; vinyl esters such as vinyl acetate andvinyl butyrate; fluorine atom-containing unsaturated monomers such as trifluoroethyl (meth)acrylate and tetrafluoropropyl (meth) acrylate; vinyl ethers such as vinyl methyl ether and vinyl ethyl ether; and polyfunctional unsaturated monomers such as ethylene glycol diacrylate, neopentyl glycol diacrylate, polypropylene glycol #400 diacrylate and one or two or more of them are usable.

Examples of other unsaturated monomers may also include benzotriazole type UV absorbing monomers such as

2-[2'-hydroxy-5'-(meth)acryloyloxyethylphenyl]-2H-benzotria zole,
2-[2'-hydroxy-5'-(meth)acryloyloxypropylphenyl]-2H-benzotri azole,
2-[2'-hydroxy-5'-(meth)acryloyloxyhexylphenyl]-2H-benzotria zole,
2-[2'-hydroxy-3'-tert-butyl-5'-(meth)acryloyloxyethylphenyl ]-2H-benzotriazole,
2-[2'-hydroxy-3'-tert-butyl-5'-(meth)acryloyloxyethylphenyl ]-5-chloro-2H-benzotriazole,
2-[2'-hydroxy-5'-tert-butyl-3'-(meth)acryloyloxyethylphenyl ]-2H-benzotriazole,
2-[2'-hydroxy-5'-tert-butyl-3'-(meth)acryloyloxyethylphenyl ]-5-chloro-2H-benzotriazole,
2-[2'-hydroxy-5'-(meth)acryloyloxyethylphenyl]-5-methoxy-2H -benzotriazole,
2-[2'-hydroxy-5'-(meth)acryloyloxyethylphenyl]-5-cyano-2H-b enzotriazole,
2-[2'-hydroxy-5'-(meth)acryloyloxyethylphenyl]-5-tert-butyl
-2H-benzotriazole,
2-[2'-hydroxy-5'-(β-methacryloyloxyethoxy)-3'-tert-butylphe nyl]-4-tert-butyl-2H-benzotriazole, and commercialized RUVA-93 (manufactured by Otsuka Chemical Co., Ltd.);

benzophenone type UV absorbing monomers such as

2-hydroxy-4-methacryloxybenzophenone,
2-hydroxy-4-(2-hydroxy-3-methacryloxy)propoxybenzophenone,
2-hydroxy-4-(2-methacryloxy)ethoxybenzophenone, and
2-hydroxy-4-vinyloxycarbonylmethoxybenzophenone;

and UV stable unsaturated monomers such as

4-(meth)acryloyloxy-2,2,6,6-tetramethylpiperidine,
4-(meth)acryloyloxy-1,2,2,6,6-pentamethylpiperidine,
4-(meth)acryloylamino-2,2,6,6-tetramethylpiperidine,
4-(meth)acryloylamino-1,2,2,6,6-pentamethylpiperidine,
4-cyano-4-(meth)acryloyamino-2,2,6,6-tetramethylpiperidine,
4-crotonoyloxy-2,2,6,6-tetramethylpiperidine,
4-crotonoylamino-2,2,6,6-tetramethylpiperidine,
1-(meth)acryloyl-4-(meth)acryloylamino-2,2,6,6-tetramethylp iperidine,
1-(meth)acryloyl-4-cyano-4-(meth)acryloylamino-2,2,6,6-tetr amethylpiperidine,
1-crotonoyl-4-crotonoyloxy-2,2,6,6-tetramethylpiperidine,

commercialized ADK Stab LA-82 and LA-87 (manufactured by Asahi Denka Co., Ltd.), and commercialized FA-711 MM and FA-712 HM (manufactured by Hitachi Chemical Co., Ltd.) and one or two or more of them can be used.

As the above-mentioned UV absorbing unsaturated monomer, benzotriazole type unsaturated monomers are preferable. The ratio of the UV stable unsaturated monomer or the UV absorbing unsaturated monomer to be used is not particularly limited and it is preferably 0 .1 to 50% by weight in the total of the monomers. If it is less than 0.1% by weight, the weather resistance of the coating film tends to become insufficient and if it exceeds 50% by weight, the appearance of the coating film is possibly deteriorated.

As the above-mentioned reactive emulsifier, any emulsifier (monomer) reactable (polymerizable) with the carboxyl group-containing monomer and/or the hydroxyl group-containing monomer may be used, and for example, an emulsifier containing a terminal functional group reacting with an acrylic monomer is preferably used. Use of these reactive emulsifier makes it possible to provide better appearance, and to further improve the dispersion stability as well as to prevent decrease in durability.

Additionally, the above-mentioned acrylic monomer means the (meth)acrylic acid, the (meth) acrylic acid ester and the like as described above.

Examples of the terminal functional group are propenyl group, allyl group, acrylyl group, methacrylyl group and the like, and acrylyl group and methacrylyl group are preferable. As described, the embodiment that the above-mentioned reactive emulsifier comprises an acrylyl group and/or a methacrylyl group as the terminal functional group is one of preferable embodiments of the present invention.

As the above-mentioned reactive emulsifier, for example, one or two or more of anionic surfactant (emulsifier), nonionic surfactants, cationic surfactants and the like can be preferably used. In particular, one or two or more of the following compounds can be used: AQUARON BC (anion type, propenyl group), AQUARON RN (nonion type, propenyl group) (all manufactured by DAI-ICHI KOGYO SEIYAKU CO., LTD.); ELEMINOL JS-2 (anion type, allyl group), ELEMINOL RS-30 (anion type, methacrylyl group), ELEMINOL NJ-60 (nonion type, allyl group) (all manufactured by SANYO CHEMICAL INDUSTRIES, LTD.); Antox-MS-60 (anion type, methacrylyl group) , MA series (nonion type, methacrylyl group; MA-30, MA-50, MA-100, MA-150), RF-751 (cation type, allyl group) (all manufactured by Nippon Nyukazai Co., LTD.); BLEMER ASEP series (nonion type, acrylyl group), BLEMER 70PEP-350B (all manufactured by NOF CORPORATION). Among them, Antox-MS-60 (anion type, methacrylyl group) is preferably used.

As the use amount of the above-mentioned reactive emulsifier, it is preferable that lower limit is 1% by weight (% by mass) and upper limit is 20% by weight. If it is less than 1% by weight, sufficient dispersion stability may not be possibly exhibited and if it exceeds 20% by weight, sufficient resistance properties of the coating film may not be possibly provided. More preferable lower limit is 3% by weight and upper limit is 15% by weight, and further preferable lower limit is 3% by weight and upper limit is 10% by weight.

A method for solution polymerization of the above-mentioned monomer components in an organic solvent is not particularly limited and hydrophilic organic solvents compatible with water are preferable to be used as the organic solvent. Examples of the solvents are alkyl alcohols such as methyl alcohol, ethyl alcohol, n-propyl alcohol, isopropyl alcohol, n-butyl alcohol, sec-butyl alcohol, tert-butyl alcohol, and isobutyl alcohol; ethylene glycols such as ethylene glycol, ethylene glycol monomethyl ether, ethylene glycol monobutyl ether, propylene glycol monoethyl ether, and diethylene glycol; esters such as ethyl acetate; ether alcohols such as methylcellosolve, ethylcellosolve, propylcellosolve, butylcellosolve, methyl carbitol, and ethyl carbitol; ether esters such as methylcellosolve acetate, ethylcellosolve acetate, and propylene glycol monomethyl ether acetate; aromatic or aliphatic hydrocarbons such as benzene, toluene, xylene, cycohexane, and n-heptane; ketones such as acetone and methyl ethyl ketone and one or two or more of them can be used.

Among these organic solvents, those having low boiling points are preferable to be used in the case the solvents are removed after the acrylic resin is dispersed in water and for example, lower alcohols having 1 to 4 carbon atoms are preferable. Also, in the case the acrylic resin is dispersed in awater/organic solvent mixed solvent, those having high boiling points are preferable to be used and for example, propylene glycol monoethyl ether is preferable.

The organic solvents to be used for the water/organic solvent mixed solvent are same as the above-mentioned solvents.

The above-mentioned organic solvents are used in combination with water and in such a case, in order to improve the polymerizable property of the monomer components, the polymerization reaction is carried out at the ratio of water preferably 85% by weight or lower, more preferably 60% by weight or lower, and even more preferably 50% by weight or lower, in total solvent amount 100% by weight.

In the above-mentioned polymerization method, it is preferable to use, as a polymerization initiator, persulfates such as ammonium persulfate, sodium persulfate, and potassium persulfate; hydrogen peroxide; azo compounds such as

azobis-2methylpropionamidine chloride,
2,2'-azobisisobutyronitrile,
2,2'-azobis(2-methylbutyronitrile), and
2,2'-azobis-(2,4-dimethylvaleronitrile); and peroxides such as benzoyl peroxide, lauroyl peroxide, cumene hydroperoxide, and
tert-butyl peroxy-2-ethylhexanoate. Also, as a promoter, reducing agents such as sodium hydrogen sulfite, sodium sulfite, Mohr's salt, sodium pyropersulfite, formaldehyde sodium sulfoxylate, and ascorbic acid; and amines such as ethylenediamine, ethylenediamine tetraacetatesodiumsalt, and glycine maybe used in combination. Each of these polymerization initiators and promoters are used alone or in combination of two or more thereof.

In the above-mentioned polymerization method, a chain transfer agent may be used based on the necessity. Such a chain transfer agent is not particularly limited and hydrophobic chain transfer agent can be used.

As the above-mentioned hydrophobic chain transfer agent, thiol compounds having hydrocarbon groups having 3 or more carbon atoms and compounds having 10% or lower solubility in water at 25°C are preferable and the above-mentioned chain transfer agents may include thiol chain transfer agents such as butanethiol, octanethiol, decanethiol, dodecanethiol, hexadecanethiol, octadecanethiol, cyclohexylmercaptan, thiophenol, octyl thioglycolate, octyl 2-mercaptopropionate, octyl 3-mercaptopropionate, mercaptopropionic acid 2-ethylhexyl ester, octanoic acid 2-mercaptoethyl ester, 1,8-dimercapto-3,6-dioxaoctane, decanetrithiol, dodecylmercaptan; halides such as tetrachlorocarbon, tetrabromocarbon, methylene chloride, bromoform, and bromotrichloroethane; and unsaturated hydrocarbon compounds α-methylstyrenedimer, α-terpinene, γ-terpinene, dipentene, and tarpinolene and one or two or more of them can be used. Among .them, thiol chain transfer agents comprising hydrocarbon groups having 3 or more carbon atoms are preferable.

Based on the necessity, a hydrophilic chain transfer agent may be used in combination with the above-mentioned hydrophobic chain transfer agent. As the above-mentioned hydrophilic chain transfer agent, examples may include thiol chain transfer agents such as mercaptoethanol, thioglycerol, thioglycolic acid, mercaptopropionic acid, 2-mercaptopropionic acid, 3-mercaoptopropionic acid, thiomalic acid, and 2-mercaptoethanesulfonic acid; primary alcohols such as 2-aminopropan-1-ol; secondary alcohols such as isopropanol; and lower oxoacids and their salts such as phosphorous acid, hypophosphorous acid and their salts (e.g. sodium hypophosphite andpotassiumhypophosphite), sulfurous acid, hydrogensulfite, dithionous acid, metabisulfurous acid and their salts (e.g. sodium sulfite, sodium hydrogen sulfite, sodium dithionite, sodium metadisulfite, potassium sulfite, potassium hydrogen sulfite, sodium dithionite, and potassium metadisulfite). One or two or more of them can be used.

As an addition method of the above-mentioned chain transfer agent to a reaction container, they may be added continuously, for example, dropwise or in dividingmanner. The chain transfer agent may be added alone to the reaction container or after being mixed previously with monomers, solvent, or the like.

The above-mentioned polymerization method may be carried out in batch manner or continuous manner.

In the polymerization method, an addition method of the monomer components and polymerization initiator to the reaction container is not particularly limited and preferable methods are those for carrying out polymerization by loading the reaction container with the organic solvent and all of the monomer components and adding the polymerization initiator to the reaction container; by loading the reaction container with the organic solvent and some of the monomer components and adding the polymerization initiator and the remaining monomer components; by loading the reaction container with the organic solvent and adding the entire amounts of the monomers and the polymerization initiator. Among these methods, since the molecular weight distribution of the obtained acrylic resin can be narrow (sharp), polymerization is preferable to be carried out by a method of successively dropwise adding the polymerization initiator and the monomers to the reaction container.

In the above-mentioned polymerization method, the polymerization conditions such as polymerization temperature or the like can be properly determined based on the solvent, the polymerization initiator, and the chain transfer agent and the polymerization temperature is generally preferably 0°C or higher and 150°C or lower. It is more preferably 40°C or higher and even more preferably 50°C or higher. Its is also more preferably 120°C or lower and evenmore preferably 100°C or lower.

In the present invention, other than the solution polymerization method as a method of polymerizing the above-mentioned monomer components, there are methods by suspension polymerization and emulsion polymerization. However, if a suspension polymerization is employed, with respect to the resin to be obtained, a resin containing no organic solvent can be obtained, however the resin possibly have undesirable particle diameter distribution or molecular weight to result in impossibility of giving good appearance, or if an emulsion polymerization, with respect to the resin to be obtained in emulsion state, the molecular weight may not be decreased sufficiently and it probably becomes difficult to give better appearance. Accordingly, in the present invention, the solution polymerization method is most desirable to give good appearance, coating film physical properties of the resin to be obtained and sufficiently improve the stability.

In the production process of the above-mentioned acrylic resin dispersed in water, the acrylic resin obtained in the above-mentioned manner is to be dispersed in water or in water/organic solvent mixed solvent in the presence of the above-mentioned amine compound. Preferable embodiments of this step are, for example, methods of adding the amine compound to an organic solvent containing the acrylic resin for neutralizing the acrylic resin and then dispersing the neutralized product in water or a water/organic solvent mixed solvent; of adding and dispersing the neutralized product to and in water or a water/organic solvent mixed solvent; of adding water or a water/organic solvent mixed solvent containing the amine compound to the organic solvent containing the acrylic resin for neutralizing and dispersing the acrylic resin; and of adding the organic solvent containing the acrylic resin to water or a water/organic solvent mixed solvent containing the amine compound for neutralizing and dispersing the acrylic resin. Among them, the method of adding the above-mentioned amine compound to the organic solvent containing the acrylic resin for neutralizing the acrylic resin and then dispersing the neutralized product in water or a water/organic solvent mixed solvent is preferable.

The acrylic resin composition dispersed in water of the present invention is an embodiment using as the neutralizing base (a) a primary amine and/or secondary amine having a boiling point of 280°C or less, which are reactable with the water-dispersible isocyanate compound, or (b) a tertiary amine having a boiling point of 280°C or less, which is reactable with the water-dispersible isocyanate compound, and in the case of using the amine compound of (b) , the acrylic resin composition dispersed in water essentially comprises the reactive emulsifier as a constituent of the acrylic resin.

In such acrylic resin composition dispersed in water, the expression of "amine reactable with the water-dispersible isocyanate compound" means the amine (amine compound) containing at least one group selected from primary amino groups, secondary amino groups and hydroxyl groups in the molecule. Consequently, a tertiary amine essentially containing a hydroxyl group is .preferably used in the case of the above-mentioned embodiment (b) using the tertiary amine.

The boiling point of the above-mentioned amine compound is 280°C or less. If it exceeds 280°C, residual amine in the coating film may increase and therefore the coating film physical properties such as durabilitymaynotpossiblybecome sufficient. It is more preferably 150°C or less.

In the above-mentioned embodiment (a), preferable examples of the amine compound are secondary amine compounds (secondary amines) such as dimethylamine, diethylamine, dipropylamine, diethanolamine and the like; primary amine compounds (primary amines) such as isopropylamine and the like, and one or two or more of them can be preferably used. Among them, diethylamine and dipropylamine are preferable

In the above-mentioned embodiment (b), preferable examples of the amine compound are one or two or more of dimethylethanolamine, N-methyl diethanolamine and the like. Among them, dimethylethanolamine is preferable.

The use amount of the above-mentioned amine compound is proper if it can sufficiently neutralize the acrylic resin and maintain the dispersion stability of the resin after the solvent removal and is not particularly limited. For example, in case of using dimethylethanolamine, the amount is preferable to be sufficient to neutralize 30 to 150 mole % of the carboxyl groups of the acrylic resin, and in case of using diethylamine, it is preferable to be sufficient to neutralize 50 to 200 mole % thereof.

The method of dispersion in water or water/organic solvent mixed solvent can be carried out by mechanical stirring using a rod or a hand mixer. Additionally, as it will be described later, dispersion in water can be carried out without using an emulsifier, however for further improved stability, an emulsifier may be used and the emulsifiers as described above, and amphotericsurfactants, polymer surfactants, polymerizable surfactants having one or two or more polymerizable carbon-carbon unsaturated bond in one molecule can be employed.

In the above-mentioned production process, as described, in the case of removing the organic solvent (removing the solvent) after the dispersion in water, as the solvent removal agent, vacuum removal can be employed.

The acrylic resin dispersed in water obtained in the above-mentioned process is preferable to have an acid value of 50 mg KOH/g or lower. If it exceeds 50 mg KOH/g, the solubility of the obtained resin in water is so high that good durability may not be obtained in the case the obtained resin dispersion in water is used for various purposes and that the viscosity may not be decreased sufficiently. It is more preferably 30 mg KOH/g or lower and even more preferably 20 mg KOH/g or lower. Also, it is preferably 5 mg KOH/g or higher. If it is less than 5 mg KOH/g, the dispersion stability of the resin may be decreased to result in impossibility of production of a stable acrylic resin composition dispersed in water. It is more preferably 10 mg KOH/g or higher.

Also, the hydroxyl value is 30 mg KOH/g or higher and 200 mgKOH/gor lower. If it is less than 30mgKOH/g, the crosslinking degree in the coating film formation may not be sufficient to result in impossibility of obtaining excellent coating film properties, and if it exceeds 200 mg KOH/g, the effects of the present invention cannot possibly be achieved. It is more preferably 40 mg KOH/g or higher and 180 mg KOH/g or lower, even more preferably 60 mg KOH/g or higher and 160 mg KOH/g or lower and specifically more preferably 80 mg KOH/g or higher and 160 mg KOH/g or lower.

Additionally, the acid value and the hydroxyl value in the present description are reduced values of the solid contents.

The acrylic resin dispersed in water is preferable to have a glass transition temperature (Tg) in the entire polymer composing the acrylic resin of 0°C or higher and 90°C or lower. Above all, in the case the acrylic resin composition dispersed in water of the present invention is used for a coating material for an automobile, it is more preferably 10°C or higher and 80°C or lower and further preferably 15°C or higher and 60°C or lower.

The glass transition temperature can be calculated by conversion of the temperature (K) calculated according to the following Fox equation to (°C):

$$1/Tg = \Sigma(Wi/Tgi)$$

Wherein Wi denotes the weight (mass) distribution of monomer i: and Tgi denotes Tg of the polymer of monomer i.

Further, the acrylic resin dispersed in water is preferable to have a number average molecular weight 1000 or higher and 100000 or lower. If it is less than 1000, the durability may not possibly become sufficient and if it exceeds 100000, the leveling property may not possibly become good to result in impossibility of giving good appearance. More preferable upper limit is 30000 and lower limit is 3000, and further preferable upper limit is 10000 and lower limit is 5000. As a range, it is preferably from 1000 to 100000, more preferably from 3000 to 30000 and further preferably from 5000 to 10000. The number average molecular weight means the molecular weight measured on the basis of polystyrene by HLC-8020 type gel permeation chromatography (column: TSK gel G-5000HXL and TSK gel GMHXL-L are serially used, manufactured by TOSOH CORPORATION, hereinafter referred to as GPC).

In the acrylic resin composition dispersed in water of the present invention, the water-dispersible isocyanate compound is preferably in a state that the isocyanate compound is previously dispersed in water so as to be O/W type, or diluted with an organic solvent. The isocyanate compound in such states may be referred to as "isocyanate dispersed in water".

Examples of the above-mentioned organic solvents are alkyl alcohols such as methyl alcohol, ethyl alcohol, n-propyl alcohol, isopropyl alcohol, n-butyl alcohol, sec-butyl alcohol, tert-butyl alcohol, and isobutyl alcohol; ethylene glycols such as ethylene glycol, ethylene glycol monomethyl ether, ethylene glycol monobutyl ether, propylene glycol monoethyl ether, and diethylene glycol; esters such as ethyl acetate; ether alcohols such as methylcellosolve, ethylcellosolve, propylcellosolve, butylcellosolve, methyl carbitol, and ethyl carbitol; ether esters such as methylcellosolve acetate, ethylcellosolve acetate, and propylene glycol monomethyl ether acetate; aromatic or aliphatic hydrocarbons such as benzene, toluene, xylene, cycohexane, and n-heptane; ketones such as acetone and methyl ethyl ketone and one or two or more of them can be used.

Use of such an isocyanate dispersed in water as a crosslinking agent makes the acrylic resin composition as one component composition with sufficient storage (preservation) stability and capable of giving excellent characteristic properties such as film improved formability, hardenability, solvent resistance, durability and the like in the case the resin composition is used for a coating film, and it is supposed owing to the following reasons.

That is, it is considered that previous dispersion of the isocyanate (the isocyanate compound) in water produces an emulsified product in which active isocyanato group is taken in the inside of the isocyanate and therefore the dispersion stability is improved and at the same time, reaction with the neutralized base and functional groups (preferably hydroxyl group) in the resin is suppressed and promoted moderately to result in sufficient storage stability (usable duration) and improved coating film appearance.

The above-mentioned isocyanate dispersed in water can be obtained by, for example, adding the isocyanate to water or a water-soluble organic solvent and stirring the mixture by manual stirring using a rod or mechanical stirring using a hand mixer. The isocyanate is preferably in polymer state (polyisocyanate) and block polyisocyanate may also be used.

Based on the necessity, a crosslinking agent reactive on carboxyl group may be used in combination and examples of such a crosslinking agent are compounds and polymers having functional groups such as oxazoline group, carbodiimido group, aziridinyl group, epoxy group, alkoxysilane group, cyclocarbonato group, methylol group, methylol alkyl group, and vinyl ether group; and metal crosslinking agent such as zirconium or the like. One or two or more of them can be used. More particular examples are polyvalent metal compounds such as a zirconium compound, a zinc compound, and a titanium compound; oxazoline compounds; and epoxy compounds. The use amounts of these crosslinking agents may be set properly depending on the species of the crosslinking agents and the uses.

Preferable examples of the above-mentioned polyisocyanate dispersed in water are those obtained by self-emulsifying polyisocyanate in water, those obtained by forcibly dispersing them by stirring apparatus and the like, and those obtained by dispersing them using an anionic or nonionic surfactant, and use of polyisocyanate which is not dispersed in water (no self-emulsifying) in combination further improves the durability.

As the polyisocyanate, for prevention of yellowing of the coating film, yellowing-free polyisocyanates comprising no isocyanato group directlybonded to aromatic rings are preferable and one or two or more of polyisocyanates derivatives (modified products), e.g. diisocyanates such as hexamethylene diisocynate and isophorone diisocyanate; and adduct polyisocyanates such as trimethylol propane adducts, biurets, and isocyanurates of these diisocyanates, can be used.

Examples of the above-mentioned polyisocyanate dispersed in water may include Aquanate 100, Aquanate 110, Aquanate 200, and Aquanate 210 (all trade names; manufactured by NIPPON POLYURETHANE INDUSTRY CO., LTD.); Bayhydur TPLS-2032, SUS-Isocyanate L801 Bayhydur VPLS-2319, Bayhydur 3100, VPLS-2336, and VPLS-2150/1 (all trade names; manufactured by Sumika Bayer Urethane Co., Ltd.); Takenate WD-720, Takenate WD-725, and Takenate WD-220 (all trade name; manufactured by Mitsui Takeda Chemicals, Inc.) ; and RESAMINE D-56 (trade name; manufactured by Dainichiseika Color & Chemicals Mfg. Co., Ltd.) and one or two or more of them can be used.

As the polyisocyanate which is not dispersed in water to be used in combination with the polyisocyanate dispersed in water, those used commonly as high solid type in solvent system may be used and one or two or more of Desmodur N 3400, Desmodur N 3600, Desmodur VPLS 2294 (all trade names; manufacturedby Sumika Bayer Urethane Co., Ltd.) and Takenate D-170HN (trade name; manufactured by Mitsui Takeda Chemicals, Inc.) can be used.

As blending example of the polyisocyanate dispersed in water and the polyisocyanate which is not dispersed in water, for example, a mixture in which WD-725 (trade name; manufactured by Mitsui Takeda Chemicals, Inc.) as the polyisocyanate dispersed in water Takenate and Desmodur VPLS 2294 (trade name; manufactured by Sumika Bayer Urethane Co., Ltd.) as the polyisocyanate which is not dispersed in water are blended in a ratio of 4:1 (ratio by weight) may be used.

The above-mentioned block polyisocyanate dispersed in water is obtained by crosslinking the acrylic resin composition dispersed in water at the time of thermal drying and blocking the isocyanato groups of the polyisocyanate dispersed in water with a blocking agent so as to improve the storage stability at a normal temperature.

As the above-mentioned blocking agent, preferable examples are monofunctional sealing agent such as malonic acid diethyl ester, ethyl acetacetate, ε-caprolactam, butanonoxime, cyclehxanonoxime, 1,2,4-triazole, dimethyl-1,2,4-triazole, 3,5-dimethylpyrazole, and imidazole. Among them, a sealing agent cleaves preferably in the range of temperature up to 160°C, more preferably up to 150°C. More preferable examples are butanonoxime, cyclohexanonoxime, and 3,5-dimethylpyrazole and a further preferable example is butanonoxime.

Examples of the block polyisocyanate dispersed in water may include Takenate WB-720, Takenate WB-730, and Takenate WB-920 (all trade name; manufactured by Mitsui Takeda Chemicals, Inc.); Bayhydur BL 116, Bayhydur BL 5140, Bayhydur BL 5235, Bayhydur TPLS 2186, and Desmodur VPLS-2310 (all trade names; manufactured by Sumika Bayer Urethane Co., Ltd.) and one or two or more of them can be used.

The above-mentioned polyisocyanate dispersed in water and block polyisocyanate dispersed in water may be used while being mixed with an organic solvent.

In the acrylic resin composition dispersed in water of the present invention, the content of the water-dispersible isocyanate may be set properly depending on the used and is not particularly limited and it is preferably set so as to adjust the upper limit of the isocyanato group 3.0 moles and the lower limit 0.5 moles to 1 mole of hydroxyl group which the above-mentioned acrylic resin comprises. If it is out of the range, sufficient durability and weather resistance may not possibly be obtained. More preferable upper limit is 2.5 moles and lower limit is 1.0 mole and even more preferable upper limit is 2.0 moles and lower limit is 1.2 moles.

The acrylic resin composition dispersed in water may contain pigments and additives based on the necessity. Examples of the additives are a leveling agent, a UV absorbing agent, a UV stabilizer, an antioxidant, a polymerization inhibitor, a filler, a coupling agent, an anti-rust agent, an anti-bacterial agent, a metal inactivation agent, a wetting agent, a deforming agent, a surfactant, a reinforcing agent, a plasticizer, a lubricant, an antifogging agent, an anticorrosive agent, a pigment dispersant, a fluidity adjustment agent, a peroxide decomposition agent, a die discoloration agent, a fluorescent brightener, an organic anti-flaming agent, an inorganic anti-flaming agent, a dripping prevention agent, a melt fluidity reforming agent, an antistatic agent, an anti-algae agent, an anti-molding agent, a flame retardant, a slipping agent, a metal chelating agent, an anti-blocking agent, a heat resistance stabilizer, a machining stabilizer, and a coloring agent. One or two or more of them can be used.

In the present invention, the acrylic resin composition dispersed in water is applied to a substrate and hardened to form a hardened coating film suitable for various uses.

Examples useful for the substrate are inorganic substrates such as glass, slate, concrete, mortar, ceramic, and stones; metal substrates such as metal sheets of aluminum, iron, zinc, tin, copper, titanium, stainless steel, a tin plate, agalvanized sheet, metals plated with zinc, copper and chromium, metals treatedwith chromic acid andphosphoric acid; plastic substrates such as polyethylene, poly(vinyl chloride), ABS (acrylonitrile-butadiene-styrene), FRP (fiber-reinforced plastics), poly(ethylene terephthalate), polycarbonate, poly(methyl methacrylate), polystyrene, polypropylene, polyesters, polyolefins, acrylic resin, epoxy resin, and nylon resin; synthetic leathers; wood materials such as Japanese cypress, Japanese cedar, pine, and laminated wood; and organic materials such as fiber and paper. These substrate may be coated with commonly used coating composition such as a primer, an underlayer coating, an intermediate coating, and a metallic base top coating before the acrylic resin composition dispersed in water is applied.

A coating method for forming the coating film using the acrylic resin composition dispersed in water and a hardening method of the coating film may be set properly based on the uses and methods preferably employed for the coating method are immersion coating, brush coating, rolling brush coating, spray coating, roll coating, spin coating, dip coating, bar coating, flow coating, electrostatic coating, and die coating.

The hardening method can be carried out by normal temperature hardening and heat hardening and the hardening conditions may be set properly depending on the uses.

The thickness of the coating film to be formed using the acrylic resin composition dispersed in water may be set properly depending on the uses and with respect to the hardness of the coating film, since the hardness to be required differs depending on the uses of the coating film, the addition amounts of the constituent components and the reaction conditions may be set properly so as to give the proper hardness for the uses. And, in the case of using the acrylic resin composition dispersed in water for a coating composition for automobiles such as a clear top coating composition for finishing an automobile and refinishing an automobile, the heating temperature is preferably 40°C or higher and 200°C or lower and the thickness of the coating film is preferably 10 µm or thicker and 100 µm or thinner. More preferably, the heating temperature is 50°C or higher and 180°C or lower and the thickness of the coating film is 20 µm or thicker and 80 µm or thinner.

The present invention is also a two-component coating composition set comprising a container (hereinafter referred to as "container (a)") containing an acrylic resin containing a carboxyl group-containing monomer and a hydroxyl group-containing monomer and a neutralizing base, and a container (hereinafter referred to as "container (b)") containing a water-dispersible isocyanate compound,

wherein the neutralizing base is an amine reactable with the water-dispersible isocyanate compound, and is a primary amine and/or secondary amine having a boiling point of 280°C or less.

The present invention is also a two-component coating composition set comprising a container (hereinafter referred to as "container (a')") containing an acrylic resin containing a carboxyl group-containing monomer, a hydroxyl group-containing monomer and a reactive emulsifier and a neutralizing base, and a container (hereinafter referred to as "container (b)") containing a water-dispersible isocyanate compound,

wherein the neutralizing base is an amine reactable with the water-dispersible isocyanate compound, and is a tertiary amine having a boiling point of 280°C or less.

With respect to the two-component coating composition set, the container (a) contains the acrylic resin comprising the carboxyl group-containing monomer and the hydroxyl group-containing monomer as essential components and the neutralizing base, and it may also contain reacted product of these components. Further, the container (a) may further contain a solvent such as water and an organic solvent. A preferable embodiment of the container (a) is an embodiment containing the acrylic resin composition dispersed in water obtainedby dispersing the above-mentioned acrylic resin inwater or a water/organic solvent mixed solvent in the presence of the neutralizing base. A more preferable embodiment is an embodiment containing the acrylic resin composition dispersed in water obtainedby dispersing the above-mentioned acrylic resin in water in the presence of the neutralizing base. Additionally, the embodiment that the above-mentioned acrylic resin further contains a reactive emulsifier as a constituent is preferable.

The container (a' ) contains the acrylic resin comprising the carboxyl group-containing monomer, the hydroxyl group-containing monomer and the reactive emulsifier as essential components and the neutralizing base, and it may also contain reacted product of these components. Further, the container (a') may further contain a solvent such as water and an organic solvent. A preferable embodiment of the container (a') is same as the above-mentioned container (a).

The above-mentioned examples may be preferably used as acrylic resin, amine compound, water-dispersible isocyanate compound, and solvent and various types of additives, which are added based on the necessity, to be used for the above-mentioned two-component coating composition set and their amounts may be adjusted so as to satisfy the above-mentioned ratios depending on the capacity of the container. Further, the acrylic resin dispersed in water can be obtained as described above.

In the present invention, the embodiment providing coating composition as the two-component coating composition set is preferable in the case using non-blocked polyisocyanate as the water-dispersible isocyanate compound. On the contrary, in the case using blocked polyisocyanate, coating composition is to be provided as one-component coating composition containing the above-mentioned acrylic resin and blocked polyisocyanate

A method of using the above-mentioned two-component coating composition set is not limited to the case that the acrylic resin is dispersed in water or a water/organic solvent mixed solvent in the presence of the amine compound and the water-dispersible isocyanate compound, and there are following preferable embodiments of the method; a method of loading the container (b) with the contents of the container (a) (or (a' ) ) ; and a method of loading the container (a) (or (a')) with the contents of the container (b). Additionally, the use method, which is a method of using a two-component coating composition set composed of a main component (A) and a hardening component (B) wherein the main component (A) is supplied from the container (a) (or (a')) and the hardening component (B) is supplied from the container (b), and mixing the main component (A) and the hardening component (B) , is also one of preferable embodiments of the present invention.

With respect to the two-component coating composition set, the container is not particularly limited and those having a capacity of 1L to 18L can be used. Particularly, drum cans and petroleum cans may be used. These containers may be treated for disinfection by autoclave, UV rays, and γ-rays or coated in the inside for preventing mold propagation or the inner substances from becoming rotten. As the storage method of the container, it is preferable to seal and preserve the container at a normal temperature after the container is loaded with the substance.

Owing to the above-mentioned constitution, the acrylic resin composition dispersed in water of the present invention can provide excellent coating film physical properties such as good appearance, excellent stability, durability and weather resistance, sufficiently deal with the recent environmental problems and therefore is advantageously useful for a variety of coating composition for vehicles, plastic-molded products, domestic electric appliances, steel products, large scale constructions, aircrafts, construction materials, building materials, tiles, and craft products as well as adhesives, resist, and printing ink and particularly preferably for coating composition such as solid color, metallic base, and clear top coating composition for finishing automobiles and refinishing automobiles.

BEST MODES FOR CARRYING OUT THE INVENTION

The following examples illustrate the present invention more specifically. They are, however, by no means limitative of the scope of the invention. In the examples, "part (s) " means "part(s) by weight (part(s) by mass)" and "%" represents "% by weight (% by mass) ", unless otherwise specified. Also, the acid value and the hydroxyl value are reduced values of the solid contents.

Production example 1 (Acrylic resin A dispersed in water)

Styrene 60. 0 parts, methyl methacrylate 58.0 parts, butyl methacrylate 149.1 parts, cyclohexyl methacrylate 60.0 parts, 2-hydroxyethyl methacrylate 37.6 parts, 2-hydroxyethyl acrylate 33.6 parts, acrylic acid 7.8 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (a-1) with solid matter about 56.5% by weight. After diethylamine 7.9 parts was added to the obtained resin solution (a-1) and stirred at 70°C for 10 minutes, deionized water 380 parts was gradually added to emulsify the resin solution. Isopropyl alcohol was removed from the emulsified resin solution (a-1) by azeotropic distillation to obtain an acrylic resin A dispersed in water with solid matter 53.5% by weight.

Production example 2 (Acrylic resin B dispersed in water)

Styrene 60.0 parts, methyl methacrylate 49. 8 parts, butyl methacrylate 149.1 parts, cyclohexyl methacrylate 60.0 parts, 2-hydroxyethyl methacrylate 37.6 parts, 2-hydroxyethyl acrylate 33.6 parts, acrylic acid 16.0 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (b-1) with solid matter about 56.5% by weight. After diethylamine 16.2 parts was added to the obtained resin solution (b-1) and stirred at 70°C for 10 minutes, deionized water 380 parts was gradually added to emulsify the resin solution. Isopropyl alcohol was removed from the emulsified resin solution (b-1) by azeotropic distillation to obtain an acrylic resin B dispersed in water with solid matter 53.5% by weight.

Production example 3 (Acrylic resin C dispersed in water)

Styrene 73.1 parts, methyl methacrylate 40.2 parts, butyl methacrylate 151.9 parts, cyclohexyl methacrylate 73.1 parts, 2-hydroxyethyl acrylate 41.8 parts, acrylic acid 26.0 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (c-1) with solid matter about 56.5% by weight. After diethylamine 26.4 parts was added to the obtained resin solution (c-1) and stirred at 70°C for 10 minutes, deionized water 380 parts was gradually added to emulsify the resin solution. Isopropyl alcohol was removed from the emulsified resin solution (c-1) by azeotropic distillation to obtain an acrylic resin C dispersed in water with solid matter 53.5% by weight.

Production example 4 (Acrylic resin D dispersed in water)

Styrene 60. 0 parts, methyl methacrylate 58.0 parts, butyl methacrylate 149.1 parts, cyclohexyl methacrylate 60.0 parts, 2-hydroxyethyl methacrylate 37.6 parts, 2-hydroxyethyl acrylate 33.6 parts, acrylic acid 7.8 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (d-1) with solid matter about 56.5% by weight. After isopropylamine 6. 4 parts was added to the obtained resin solution (d-1) and stirred at 70°C for 10 minutes, deionized water 380 parts was gradually added to emulsify the resin solution. Isopropyl alcohol was removed from the emulsified resin solution (d-1) by azeotropic distillation to obtain an acrylic resin D dispersed in water with solid matter 53.5% by weight.

Production example 5 (Acrylic resin E dispersed in water)

Styrene 60. 0 parts, methyl methacrylate 58.0 parts, butyl methacrylate 149.1 parts, cyclohexyl methacrylate 60.0 parts, 2-hydroxyethyl methacrylate 37.6 parts, 2-hydroxyethyl acrylate 33.6 parts, acrylic acid 7.8 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (e-1) with solid matter about 56.5% by weight. After triethylamine 10.9 parts was added to the obtained resin solution (e-1) and stirred at 70°C for 10 minutes, deionized water 380 parts was gradually added to emulsify the resin solution. Isopropyl alcohol was removed from the emulsified resin solution (e-1) by azeotropic distillation to obtain an acrylic resin E dispersed in water with solid matter 53.5% by weight.

Production example 6 (Acrylic resin F dispersed in water)

Styrene 60.0 parts, methyl methacrylate 55. 6 parts, butyl methacrylate 131.1 parts, cyclohexyl methacrylate 60.0 parts, 2-hydroxyethyl methacrylate 47.0 parts, 2-hydroxyethyl acrylate 42.0 parts, acrylic acid 10.4 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (f-1) with solid matter about 56.5% by weight. After dimethylethanolamine 12.9 parts was added to the obtained resin solution (f-1) and stirred at 70°C for 10 minutes, deionized water 480 parts was gradually added to emulsify the resin solution. Isopropyl alcohol was removed from the emulsified resin solution (f-1) by azeotropic distillation to obtain an acrylic resin F dispersed in water with solid matter 45.0% by weight.

Production example 7 (Acrylic resin G dispersed in water)

Styrene 60. 0 parts, methyl methacrylate 55. 6 parts, butyl methacrylate 131.1 parts, cyclohexyl methacrylate 60.0 parts, 2-hydroxyethyl methacrylate 47.0 parts, 2-hydroxyethyl acrylate 42.0 parts, acrylic acid 10.4 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (g-1) with solid matter about 56.5% by weight. After diethanolamine 15.2 parts was added to the obtained resin solution (g-1) and stirred at 70°C for 10 minutes, deionized water 480 parts was gradually added to emulsify the resin solution. Isopropyl alcohol was removed from the emulsified resin solution (g-1) by azeotropic distillation to obtain an acrylic resin G dispersed in water with solid matter 45.0% by weight.

Production example 8 (Acrylic resin H dispersed in water)

Styrene 60. 0 parts, methyl methacrylate 55. 6 parts, butyl methacrylate 110.8 parts, cyclohexyl methacrylate 60.0 parts, 2-hydroxyethyl methacrylate 47.0 parts, 2-hydroxyethyl acrylate42.0parts, acrylic acid 10.4 parts, reactive emulsifier (Antox-MS-60, manufactured by Nippon Nyukazai Co., LTD) 22.6 parts (solid matter is 90%), and 2,2'-azo-bis-(2-methylbutyronitrile) 24.4 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (h-1) with solid matter about 56.5% by weight. After dimetylethanolamine 12.9 parts was added to the obtained resin solution (h-1) and stirred at 70°C for 10 minutes, deionized water 480 parts was gradually added to emulsify the resin solution. Isopropyl alcohol was removed from the emulsified resin solution (h-1) by azeotropic distillation to obtain an acrylic resin H dispersed in water with solid matter 45.0% by weight.

Production example 9 (Acrylic resin I dispersed in water)

Styrene 60.0 parts, methyl methacrylate 55. 6 parts, butyl methacrylate 90.5 parts, cyclohexyl methacrylate 60.0 parts, 2-hydroxyethyl methacrylate 47.0 parts, 2-hydroxyethyl acrylate42.0parts, acrylic acid 10.4 parts, reactive emulsifier (Antox-MS-60, manufactured by Nippon Nyukazai Co., LTD) 45.1 parts (solid matter is 90%), and 2,2'-azo-bis-(2-methylbutyronitrile) 24.4 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (i-1) with solid matter about 56.5% by weight. After dimethylethanolamine 12.9 parts was added to the obtained resin solution (i-1) and stirred at 70°C for 10 minutes, deionized water 480 parts was gradually added to emulsify the resin solution. Isopropyl alcohol was removed from the emulsified resin solution (i-1) by azeotropic distillation to obtain an acrylic resin I dispersed in water with solid matter 45.0% by weight. Production example 10 (Acrylic resin J dispersed in water)

Styrene 60. 0 parts, methyl methacrylate 55. 6 parts, butyl methacrylate 110.8 parts, cyclohexyl methacrylate 60.0 parts, 2-hydroxyethyl methacrylate 47.0 parts, 2-hydroxyethyl acrylate 42.0 parts, acrylic acid 10.4 parts, reactive emulsifier (MA-50A, manufactured by Nippon Nyukazai Co., LTD) 20.3 parts, and 2,2'-azobis-(2-methylbutyronitrile) 24.4 parts were dropwise added to isopropyl alcohol 121.8 parts heated at 85°C in 4 hours. On completion of the dropwise addition, the mixture was kept at 85°C for 4 hours and then the resulting product was diluted with isopropyl alcohol 200.0 parts to obtain a resin solution (j-1) with solid matter about 56.5% by weight. After dimetylethanolamine 12.9 parts was added to the obtained resin solution (j-1) and stirred at 70°C for 10 minutes, deionized water 480 parts was gradually added to emulsify the resin solution. Isopropyl alcohol was removed from the emulsified resin solution (j-1) by azeotropic distillation to obtain an acrylic resin J dispersed in water with solid matter 45.0% by weight.

Production example 11 (Acrylic resin K dispersed in water)

Styrene 60.0 parts, methyl methacrylate 55. 6 parts, butyl methacrylate 131.1 parts, cyclohexyl methacrylate 60.0 parts, 2-hydroxyethyl methacrylate 47.0 parts, 2-hydroxyethyl acrylate 42.0 parts, acrylic acid 10.4 parts, and 2,2'-azobis-(2-methylbutyronitrile) 12.2 parts were dropwise added to isopropyl alcohol 121.8 parts heated at 85°C in 4 hours. On completion of the dropwise addition, the mixture was kept at 85°C for 4 hours and then the resulting product was diluted .with isopropyl alcohol 200.0 parts to obtain a resin solution (k-1) with solid matter about 56.5% by weight. After triethanolamine 21.6 parts was added to the obtained resin solution (k-1) and stirred at 70°C for 10 minutes, deionized water 480 parts was gradually added to emulsify the resin solution. Isopropyl alcohol was removed from the emulsified resin solution (k-1) by azeotropic distillation to obtain an acrylic resin K dispersed in water with solid matter 45.0% by weight.

<Example 1>

A polyisocyanate compound dispersed in water 5.7 parts obtained by emulsifying a polyisocyanate compoundA (trade name: "Bayhydur 3100", manufactured by Sumitomo Bayer Urethane Co., Ltd.) 3.3 parts with deionized water 2.4 parts was added to the acrylic resin A dispersed in water (solid matter 53.5% by weight; acid value 15 mg KOH/g; hydroxy value 80 mg KOH/g; and Tg 50°C; number average molecular weight 20000) 10.0 parts to obtain an acrylic resin composition dispersed in water with solid matter about 55% by weight. The obtained resin composition and the acrylic resin A dispersed in water were subjected to the following evaluations. The results are shown in Table 1.

(Coating film appearance)

The above-mentioned resin composition was applied to a zinc phosphate-treated steel plate in a thickness of 40 µm in dry state and dried at 60°C for 30 minutes and the appearance was observed with eyes.
○: good appearance; Δ: existence of partially infection parts; X: existence of cracks

(Durability)

Specimens used for the coating film appearance evaluation were immersed in hot water at 40°C for 24 hours and the change in the appearance was observed with eyes.
○ : no change; Δ: existence of partially blisters; X : existence of entirely blisters

(Solvent resistance)

Specimens used for the coating film appearance evaluation were aged at a room temperature for 24 hours and after xylene was dropwise dripped on the coating film of the specimens and the specimens were kept still for 30 seconds, the change in the appearance was observed with eyes.
○: no change; X: dissolved or swollen

(Dispersion stability)

The acrylic resinA dispersed in water fed in a glass vessel was stood at a room temperature for 1 month, the change of the in the resin was observed with eyes.
○: no change; Δ: partially separated (can be redispersed); X: separated (cannot be redispersed)

<Example 2>

An acrylic resin composition dispersed in water with solid matter 55% by weight was obtained in the same manner as Example 1, except that the acrylic resin B dispersed in water (solid matter 53.5% by weight; acid value 30 mg KOH/g; hydroxy value 80 mg KOH/g; and Tg 50°C; number average molecular weight 20000) and the components used in the Example 1 in addition amounts respectively shown in Table 1 were used. The obtained resin composition and the acrylic resin B dispersed in water were subjected to the evaluation tests in the same manner as Example 1. The results are shown in Table 1.

<Example 3>

An acrylic resin composition dispersed in water with solid matter 55% by weight was obtained in the same manner as Example 1, except that the acrylic resin C dispersed in water (solid matter 53.5% by weight; acid value 50 mg KOH/g; hydroxy value 50 mg KOH/g; and Tg 50°C; number average molecular weight 20000) and the components used in the Example 1 in addition amounts respectively shown in Table 1 were used. The obtained resin composition and the acrylic resin C dispersed in water were subjected to the evaluation tests in the same manner as Example 1. The results are shown in Table 1.

<Example 4>

An acrylic resin composition dispersed in water with solid matter 55% by weight was obtained in the same manner as Example 1, except that a polyisocyanate compound B (trade name: "Bayhydur VPLS2319", manufactured by Sumitomo Bayer Urethane Co., Ltd.) and the components used in the Example 1 in addition amounts respectively shown in Table 1 were used. The obtained resin composition and the acrylic resin A dispersed in water were subjected to the evaluation tests in the same manner as Example 1. The results are shown in Table 1.

<Example 5>

An acrylic resin composition dispersed in water with solid matter 55% by weight was obtained in the same manner as Example 1, except that the acrylic resin D dispersed in water (solid matter 53.5% by weight; acid value 15 mg KOH/g; hydroxy value 80 mg KOH/g; and Tg 50°C; number average molecular weight 20000) and the components used in the Example 1 in addition amounts respectively shown in Table 1 were used. The obtained resin composition and the acrylic resin D dispersed in water were subjected to the evaluation tests in the same manner as Example 1. The results are shown in Table 1.

Table 1

| Constitution (parts by weight) | | Example 1 | Example 2 | Example 3 | Example 4 | Example 5 |
|---|---|---|---|---|---|---|
| Constitution (parts by weight) | Acrylic resin A dispersed in water | 10.0 | - | - | 10.0 | - |
| | Acrylic resin B dispersed in water | - | 10, 0 | - | - | - |
| | Acrylic resin C dispersed in water | - | - | 10. 0 | - | - |
| | Acrylic resin D dispersed in water | - | - | - | - | 10. 0 |
| | Polyisocyanate compound A | 3. 3 | 3. 3 | 2. 0 | - | 3. 3 |
| | Polyisocyanate compound B | - | - | - | 3. 2 | - |
| | Water | 2. 4 | 2. 4 | 1. 4 | 2. 3 | 2. 3 |
| Neutralizing base | | Diethylamine | Diethylamine | Diethylamine | Diethylamine | Isopropylamine |
| Coating film appearance | | ○ | ○ | ○ | ○ | Δ |
| Durability | | ○ | ○ | ○ | ○ | ○ |
| Solvent resistance | | ○ | ○ | ○ | ○ | ○ |
| Dispersion stability | | Δ | Δ | Δ | Δ | Δ |

<Example 6>

A polyisocyanate compound dispersed in water 6.0 parts obtained by emulsifying a polyisocyanate compound A (trade name: "Bayhydur 3100", manufactured by Sumitomo Bayer Urethane Co., Ltd.) 3.5 parts with deionized water 2.5 parts was added to the acrylic resin F dispersed in water (solid matter 45.0% by weight; acid value 20 mg KOH/g; hydroxy value 100 mg KOH/g; and Tg 50°C; number average molecular weight 20000) 10.0 parts to obtain an acrylic resin composition dispersed in water with solid matter about 50% by weight. The obtained resin composition and the acrylic resin F dispersed in water were subjected to the evaluation tests in the same manner as Example 1. The results are shown in Table 2.

<Example 7>

An acrylic resin composition dispersed in water with solid matter 50% by weight was obtained in the same manner as Example 6, except that the acrylic resin G dispersed in water (solid matter 45.0% by weight; acid value 20 mg KOH/g; hydroxy value 100 mg KOH/g; and Tg 50°C; number average molecular weight 20000) and the components used in the Example 6 in addition amounts respectively shown in Table 2 were used. The obtained resin composition and the acrylic resin G dispersed in water were subjected to the evaluation tests in the same manner as Example 1. The results are shown in Table 2.

<Example 8>

An acrylic resin composition dispersed in water with solid matter 50% by weight was obtained in the same manner as Example 6, except that the acrylic resin H dispersed in water (solid matter 45.0% by weight; acid value 20 mg KOH/g; hydroxy value 100 mg KOH/g; and Tg (Tg of acrylic components except for the reactive emulsifier) 52°C; number average molecular weight 7000) and the components used in the Example 6 in addition amounts respectively shown in Table 2 were used. The obtained resin composition and the acrylic resin H dispersed in water were subjected to the evaluation tests in the same manner as Example 1. The results are shown in Table 2.

<Example 9>

An acrylic resin composition dispersed in water with solid matter 50% by weight was obtained in the same manner as Example 6, except that the acrylic resin I dispersed in water (solid matter 45.0% by weight; acid value 20 mg KOH/g; hydroxy value 100 mg KOH/g; and Tg (Tg of acrylic components except for the reactive emulsifier) 54°C; number average molecular weight 7000) and the components used in the Example 6 in addition amounts respectively shown in Table 2 were used. The obtained resin composition and the acrylic resin I dispersed in water were subjected to the evaluation tests in the same manner as Example 1. The results are shown in Table 2.

<Example 10>

An acrylic resin composition dispersed in water with solid matter 50% by weight was obtained in the same manner as Example 6, except that the acrylic resin J dispersed in water (solid matter 45.0% by weight; acid value 20 mg KOH/g; hydroxy value 109 mg KOH/g; and Tg (Tg of acrylic components except for the reactive emulsifier) 52°C; number average molecular weight 7000) and the components used in the Example 6 in addition amounts respectively shown in Table 2 were used. The obtained resin composition and the acrylic resin J dispersed in water were subjected to the evaluation tests in the same manner as Example 1. The results are shown in Table 2.

Table 2

| | | Example 6 | Example 7 | Example 8 | Example 9 | Example 10 |
|---|---|---|---|---|---|---|
| Constitution (parts by weight) | Acrylic resin F dispersed in water | 10. 0 | - | - | - | - |
| | Acrylic resin G dispersed in water | - | 10. 0 | - | - | - |
| | Acrylic resin H dispersed in water | - | - | 10. 0 | - | - |
| | Acrylic resin I dispersed in water | - | - | - | 10. 0 | - |
| | Acrylic resin J dispersed in water | - | - | - | - | 10.0 |
| | Polyisocyanate compound A | 3. 5 | 3. 5 | 3. 5 | 3. 5 | 3. 5 |
| | Water | 2. 5 | 2. 5 | 2. 5 | 2. 5 | 2. 5 |
| Neutralizing base | | Dimethylethanolamine | Diethanolamine | Dimethylethanolamine | Dimethylethanolamine | Dimethylethanolamine |
| Coating film appearance | | ○ | ○ | ○ | ○ | ○ |
| Durability | | ○ | Δ | ○ | ○ | ○ |
| Solvent resistance | | ○ | ○ | ○ | ○ | ○ |
| Dispersion stability | | ○ | ○ | ○ | ○ | Δ |

<Comparative Example 1>

An acrylic resin composition dispersed in water with solid matter 55% by weight was obtained in the same manner as Example 1, except that the acrylic resin E dispersed in water (solid matter 53.5% by weight; acid value 15 mg KOH/g; hydroxy value 80 mg KOH/g; and Tg 50°C; number average molecular weight 20000) and the components used in the Example 1 in addition amounts respectively shown in Table 3 were used. The obtained resin composition and the acrylic resin E dispersed in water were subjected to the evaluation tests in the same manner as Example 1. The results are shown in Table 3.

<Comparative Example 2>

An acrylic resin composition dispersed in water with solid matter 50% by weight was obtained in the same manner as Example 6, except that the acrylic resin K dispersed in water (solid matter 45.0% by weight; acid value 20 mg KOH/g; hydroxy value 100 mg KOH/g; and Tg 50°C; number average molecular weight 20000) and the components used in the Example 6 in addition amounts respectively shown in Table 3 were used. The obtained resin composition and the acrylic resin K dispersed in water were subjected to the evaluation tests in the same manner as Example 1. The results are shown in Table 3.

<Comparative Example 3>

The respective tests were carried out in the same manner as Example 1, except the components selected from the components used in Example 1 in addition amounts respectively shown in Table 3 were used. The results are shown in Table 3.

Table 3

| | | Comparative Example 1 | Comparative Example 2 | Comparative Example 3 |
|---|---|---|---|---|
| Constitution (parts by weight) | Acrylic resin A dispersed in water | - | - | 10. 0 |
| | Acrylic resin E dispersed in water | 10.0 | - | - |
| | Acrylic resin K dispersed in water | - | 10. 0 | - |
| | polyisocyanate compound A | 3. 3 | 3. 5 | - |
| | Water | 2. 4 | 2. 5 | - |
| Neutralizing base | | Triethylamine | Triethanolamine | Diethylamine |
| Coating film appearance | | ○ | ○ | × |
| Durability | | × | × | - |
| Solvent resistance | | ○ | ○ | - |
| Dispersion stability | | ○ | ○ | - |

The present application claims priority under 35 U.S.C. §119 to Japanese Patent Application No.2003-422849 filed December 12, 2003, entitled "ACRYLIC RESIN COMPOSITION DISPERSED IN WATER." The contents of that application are incorporated herein by reference in their entirely.

**Claims**

1. An acrylic resin composition dispersed in water comprising an acrylic resin containing a carboxyl group-containing monomer and a hydroxyl group-containing monomer, a water-dispersible isocyanate compound, and a neutralizing base,
    wherein the neutralizing base is an amine reactable with the water-dispersible isocyanate compound, and is a primary amine and/or secondary amine having a boiling point of 280°C or less.

2. The acrylic resin composition dispersed in water according to Claim 1,
   wherein the acrylic resin further contains a reactive emulsifier as a constituent.

3. An acrylic resin composition dispersed in water comprising an acrylic resin containing a carboxyl group-containing monomer, a hydroxyl group-containing monomer and a reactive emulsifier, a water-dispersible isocyanate compound, and a neutralizing base,
   wherein the neutralizing base is an amine reactable with the water-dispersible isocyanate compound, and is a tertiary amine having a boiling point of 280°C or less.

4. A two-component coating composition set comprising a container containing an acrylic resin containing a carboxyl group-containing monomer and a hydroxyl group-containing monomer and a neutralizing base, and a container containing a water-dispersible isocyanate compound,
   wherein the neutralizing base is an amine readable with the water-dispersible isocyanate compound, and is a primary amine and/or secondary amine having a boiling point of 280°C or less.

5. The two-component type coating material set according to Claim 4,
   wherein the acrylic resin further contains a reactive emulsifier as a constituent.

6. A two-component coating composition set comprising a container containing an acrylic resin containing a carboxyl group-containing monomer, a hydroxyl group-containing monomer and a reactive emulsifier and a neutralizing base, and a container containing a water-dispersible isocyanate compound,
   wherein the neutralizing base is an amine reactable with the water-dispersible isocyanate compound, and is a tertiary amine having a boiling point of 280°C or less.

**European Patent Office**

## EUROPEAN SEARCH REPORT

Application Number

EP 04 29 3017

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/009550 A1 (YOSHIOKA MANABU ET AL) 24 January 2002 (2002-01-24) * example 6 * ----- | 1-6 | C09D133/14 C09D133/02 C09D175/04 |
| X | US 5 098 983 A (MOSBACH ET AL) 24 March 1992 (1992-03-24) * claims 5-8; example 3 * ----- | 1-6 | |
| A | EP 0 638 621 A (NIPPON PAINT CO., LTD) 15 February 1995 (1995-02-15) * claims 1,6 * * examples * ----- | 1-6 | |

| TECHNICAL FIELDS SEARCHED (Int.Cl.7) |
|---|
| C08L C09D |

The present search report has been drawn up for all claims

| Place of search | Date of completion of the search | Examiner |
|---|---|---|
| Munich | 13 April 2005 | Simmerl, R |

EPO FORM 1503 03.82 (P04C01)

**EP 1 544 268 A1**

**ANNEX TO THE EUROPEAN SEARCH REPORT
ON EUROPEAN PATENT APPLICATION NO.**

EP 04 29 3017

13-04-2005

| Patent document cited in search report | | Publication date | Patent family member(s) | | Publication date |
|---|---|---|---|---|---|
| US 2002009550 | A1 | 24-01-2002 | AU | 779166 B2 | 06-01-2005 |
| | | | AU | 2314101 A | 30-08-2001 |
| | | | GB | 2360717 A ,B | 03-10-2001 |
| | | | JP | 2001311035 A | 09-11-2001 |
| US 5098983 | A | 24-03-1992 | DE | 4001783 A1 | 25-07-1991 |
| | | | CA | 2033741 A1 | 24-07-1991 |
| | | | EP | 0443138 A1 | 28-08-1991 |
| | | | JP | 4211418 A | 03-08-1992 |
| EP 0638621 | A | 15-02-1995 | AU | 674587 B2 | 02-01-1997 |
| | | | AU | 6899594 A | 23-02-1995 |
| | | | CA | 2129720 A1 | 11-02-1995 |
| | | | DE | 69406733 D1 | 18-12-1997 |
| | | | DE | 69406733 T2 | 12-03-1998 |
| | | | EP | 0638621 A1 | 15-02-1995 |
| | | | JP | 8012925 A | 16-01-1996 |
| | | | US | 5525670 A | 11-06-1996 |

EPO FORM P0459

For more details about this annex : see Official Journal of the European Patent Office, No. 12/82